# EUROPÄISCHE PATENTSCHRIFT

(11) **EP 2 268 767 B1**
(45) Veröffentlichungstag und Bekanntmachung des Hinweises auf die Patenterteilung: **24.09.2014**
(21) Anmeldenummer: 09735165.4
(22) Anmeldetag: 24.04.2009
(51) Int. Cl.: C10G 1/00, C10G 1/06, C10G 1/10

(54) **KREISGASBEHANDLUNG ZUR DIREKTEN THERMOCHEMISCHEN UMWANDLUNG VON HOCHMOLEKULAREN ORGANISCHEN SUBSTANZEN IN NIEDERVISKOSE FLÜSSIGE ROH-, BRENN- UND KRAFTSTOFFE**
TREATMENT OF RECYCLING GAS FOR DIRECT THERMOCHEMICAL CONVERSION OF HIGH MOLECULAR WEIGHT ORGANIC SUBSTANCES INTO LOW VISCOSITY LIQUID RAW MATERIALS, COMBUSTIBLES AND FUELS
TRAITEMENT DE GAZ DE RECYCLAGE POUR LA TRANSFORMATION THERMOCHIMIQUE DIRECTE DE SUBSTANCES ORGANIQUES DE POIDS MOLÉCULAIRE ÉLEVÉ EN MATIÈRES PREMIÈRES, COMBUSTIBLES ET CARBURANTS LIQUIDES PEU VISQUEUX

(30) Priorität: 25.04.2008 DE 102008021630
(43) Veröffentlichungstag der Anmeldung: 05.01.2011
(73) Patentinhaber: Technische Werke Ludwigshafen Ag, 67063 Ludwigshafen (DE)
(72) Erfinder: BERGER, Uwe, 36289 Friedewald (DE); WILLNER, Thomas, 21077 Hamburg (DE); VANSELOW, Walter, 24963 Tarp (DE)
(74) Vertreter: Meissner, Bolte & Partner GbR
(86) Internationale Anmeldenummer: PCT/EP2009/003023
(87) Internationale Veröffentlichungsnummer: WO 2009/130046

(56) Entgegenhaltungen:
- AU-A- 3 338 178
- DE-A1- 10 215 679
- GB-A- 2 211 200
- US-A- 4 331 531

## Beschreibung

Die Erfindung betrifft ein Verfahren zur direkten thermochemischen Umwandlung von hochmolekularen organischen Substanzen in niedermolekulare Produkte, die bei Raumtemperatur als niedrigviskose Flüssigkeiten vorliegen und brennbar sind. Des Weiteren betrifft die Erfindung eine Vorrichtung zur Ausführung des erfindungsgemäßen Verfahrens.

Als hochmolekulare organische Substanzen werden kohlenstoffhaltige Stoffe und Stoffgemische aus langkettigen oder vernetzten Molekülen bezeichnet, wie sie insbesondere in nachwachsenden Rohstoffen und in Stoffen der Abfallwirtschaft vorkommen, wie etwa Biomasse, Holzabfälle, Pflanzen, Pflanzenöle, Tierfette, Knochenmehl, Altöle, Plastikabfälle und Klärschlämm. Diese Stoffe oder Stoffgemische bilden die bevorzugten Edukte oder Rohmaterialien für das erfindungsgemäße Verfahren.

Bei den angestrebten niedermolekularen Produkten bzw. Zielprodukten, die bei Raumtemperatur in Form von niedrigviskosen Flüssigkeiten vorliegen und brennbar sind, handelt es sich insbesondere um hochwertige, möglichst reine Kohlenwasserstoffe, wie petrochemische Brenn- und Kraftstoffe, mit nur geringem Heteroatomanteil (Sauerstoff, Schwefel, Stickstoff, Halogene, Phosphor, etc.), wobei die Werthaltigkeit der Zielprodukte durch den Kohlenwasserstoffanteil bestimmt wird und mit diesem ansteigt.

Verfahren zur direkten thermochemischen Umwandlung von hochmolekularen organischen Substanzen in niedermolekulare Produkte und dafür geeignete Vorrichtungen sind aus dem Stand der Technik bekannt. Bei diesen, auch mit Direktverflüssigung bezeichneten Verfahren, werden organische Feststoff-Makromoleküle bei vergleichsweise niedrigen Temperaturen bis etwa 500°C so weit gecrackt oder verkürzt, bis die Moleküllängen im Bereich der jeweils gewünschten niedrigviskosen Flüssigkeit, dem sogenannten Produktöl als Zielprodukt, vorliegen.

Gegenüber konventionellen Crackprozessen in der Dampfphase eines Umwahdiungsreaktors hat es sich danach als besonders vorteilhaft erwiesen, wenn die Crackreaktionen unter Vorwärmung der Edukte, gegebenenfalls einschließlich erforderlicher Feststoffkatalysatoren, und unter intensiver Durchmischung der Reaktionskomponenten in der Sumpfphase des Reaktors erfolgen. Dabei richtet sich die Vorwärmtemperatur nach der Cracktemperatur oder Reaktionstemperatur und wird vorzugsweise niedriger als diese gewählt.

In Kombination mit dieser Verfahrensführung wird das Reaktionsgemisch durch eine Schockerwärmung im Sekundenbereich auf die Reaktionstemperatur erhitzt, was durch die direkte Bereitstellung der vorgewärmten Edukte in zerkleinerter Form in die Sumpfphase des Reaktors und die intensive Durchmischung ermöglicht wird.

Die zudem als Reaktionsprodukte im Reaktor entstehenden schwerflüchtigen Produktfraktionen sowie die anorganischen Bestandteile der Edukte wirken autokatalytisch, was sich vorteilhaft auf die Reaktionsparameter Dauer, Druck und Temperatur auswirkt. Durch eine nach dem Stand der Technik vorgesehene Rückführung dieser als flüssige Schweröle vorliegenden schwerflüchtigen Produktfraktionen in den Reaktor wird die Aufrechterhaltung der autokatalytischen Wirkung unter Einsparung zusätzlicher Katalysatoren sichergestellt.

Ein derartiges Verfahren wird in der Pätentanmeldung DE-A1-102 15 679, die unter Mitwirkung eines der hiesigen Erfinder durchgeführt wurde, beschrieben. Danach erfolgt die thermochemische Umwandlung bzw. Direktverflüssigung der hochmolekularen organischen Edukte in die genannten hochwertigen niedermolekularen Zielprodukte durch eine Sumpfphasenreaktion bei Temperaturen zwischen 350°C und 500°C unter Ausnutzung der genannten autokatalytischen Effekte der im Kreislauf geführten schwerflüchtigen Produktfraktionen und weiterhin unter Ausnutzung einer selektiven, produktorientierten Verweilzeitsteuerung, nämlich unter sofortiger und gezielter Entfernung der Crackprodukte aus der Reaktionszone, sobald deren Moleküllängen den Bereich des gewünschten Zielproduktes erreicht haben. Realisiert wird diese selektive produktorientierte Verweilzeitsteuerung durch die bei Siedetemperatur des Reaktionsgemisches im Reaktor gleichzeitig auftretende Destillation und Strippung, indem verdampfbare bzw. flüchtige Komponenten einerseits mittels destillativen Übergangs in die Dampfphase aus dem Reaktionsgemisch entfernt werden und andererseits mittels eines Trägergasstroms aus der flüssigen Phase in die Gasphase überführt werden.

Bei Edukten mit Wasserstoffmangel und/oder einem erhöhten Heteroatomanteil wird ein hydrierendes und/oder reduzierendes Gas, vorzugsweise Wasserstoff und/oder Kohlenmonoxid als Trägergasstrom durch die flüssige Phase im Reaktor geleitet, was mit einer Absenkung des Reaktionsdrucks und mit einer Verminderung des Hydrierkatalysatorbedarfs einhergeht. Der Wasserstoff dient dabei der Stabilisierung der Crackprodukte und der Qualitätsverbesserung des Produktöls. Die hydrierende Wirkung des Wasserstoffs tritt allerdings nur bei erhöhtem Reaktionsdruck auf, der wiederum Edukt-abhängig ist. Bei Edukten mit geringem Heteroatomanteil, mithin bei großer chemischer Ähnlichkeit zwischen Edukt und Zielprodukt, kann sowohl auf die Prozessführung unter Überdruck als auch auf die Wasserstoffkomponente im Reaktionsgas verzichtet werden. In derartigen Fällen erfolgt die thermochemische Umwandlung vorzugsweise bei erniedrigtem Reaktionsdruck bzw. bei Unterdruck im Reaktor.

Das Reaktionsgemisch liegt im Reaktor in der Regel in einer Gas-Dampf-Phase, einer Flüssigphase und einer Festphase vor. Die Gas-Dampf-Phase setzt sich dabei aus dem Reaktionsgas und den dampfförmigen Reaktionsprodukten zusammen. Das Reaktionsgas umfasst Nebenprodukte der Crackreaktionen sowie gegebenenfalls weitere Komponenten, etwa das Hydriergas Wasserstoff. Die dampfförmigen Reaktionsprodukte liegen in Form von verdampften Produktöl-Kohlenwasserstoffen und - abhängig von den eingesetzten Edukten - gegebenenfalls Wasserdampf vor. Die Flüssigphase wird durch die als flüssige Schweröle vorliegenden schwerflüchtigen Produktfraktionen gebildet, während die Festphase neben festen Reaktionsrückständen auch zugesetzte Feststoffkatalysatoren und nicht verflüssigte Edukte aufweist.

Gemäß DE-A1-102 15 679 wird die Gas-Dampf-Phase mittels Phasentrennung von der Flüssigphase mit der darin suspendierten Festphase getrennt. Diese Flüssigphase wird dann durch weitere Phasentrennung in die schwerflüchtigen Produktfraktionen überführt, die wiederum in den Reaktor rückgeleitet werden. Die abgetrennte Gas-Dampf-Phase wird mittels Kondensation unter Reaktionsdruck in das Reaktionsgas mit reduzierenden und hydrierenden Anteilen und in die dampfförmigen Reaktionsprodukte mit kondensierbaren Öl- und Wasseranteilen aufgespalten. Durch Abtrennung wird auf diese Weise neben dem Produktgas, Produktöl, Produktwasser und Aerosol gewonnen. Aus dem so gewonnenen Reaktionsgas wird mittels Gastrennung der Wasserstoffanteil isoliert und zur Gänze in den Reaktor als Hydriergas rückgeführt. Der verbleibende Reaktionsgasanteil wird, so erforderlich, als Strippgas ebenfalls in den Reaktor rückgeleitet und/oder als Brenngas zur Gewinnung von Prozessenergie, gegebenenfalls nach Druckausgleich bzw. Entspannung im Falle einer Prozessführung bei Überdruck, verwendet. Für den Fall, dass die Umwandlung unter erhöhtem Reaktionsdruck erfolgt, liefert dieser damit auch den für die Gastrennung benötigten Vordruck und trägt zudem zu einer Reduzierung der für die Rückleitung des Wasserstoffs in den Reaktor benötigten Kompressionsenergie bei.

Aus den dampfförmigen Reaktionsprodukten werden gemäß der Lehre der DE-A1-102 15 679, gegebenenfalls nach Entspannung im Falle einer Prozessführung bei Überdruck, durch Destillation noch vorhandene schwerflüchtige Produktfraktionen isoliert, die ihrerseits in den Reaktor rückgeleitet werden. Durch die gegebenenfalls erforderliche Entspannung werden in der flüssigen Phase gelöste Gasanteile freigesetzt, die im Anschluss an die Destillation mittels eines weiteren Kondensationsschrittes abgetrennt und zur Prozessenergieversorgung verwendet werden. Die hierbei verbleibenden flüssigen Reaktionsprodukte enthalten nur noch Produktöl und, rohstoffabhängig, Wasser. Letzteres wird gegebenenfalls in einem weiteren Phasentrennungsschritt abgeschieden, sodass einzig das als Zielprodukt gewünschte Produktöl verbleibt.

Zur Gewinnung von zusätzlichem Wasserstoff für die Rückführung in den Reaktor als Hydriergas wird gegebenenfalls aus dem bei dieser Phasentrennung abgeschiedenen Wasser und aus Feststoffanteilen der in den Reaktor rückgeführten schwerflüchtigen Produktfraktionen unter Zugabe von externem Wasser mittels Wasserdampf-Vergasung nach der DE-A1-102 15 679 Synthesegas mit den Bestandteilen Kohlenmonoxid und Wasserstoff gebildet. Dieses wird dann direkt als reduzierendes und hydrierendes Gas in den Reaktor eingeschleust. Gegebenenfalls wird alternativ oder ergänzend dazu das Synthesegas, ebenfalls zusammen mit dem bei der Phasentrennung gewonnenen Wasser, in einer Kohlenmonoxid-Konvertierung vollständig in Wasserstoff und Kohlendioxid überführt. Der auf diese Weise gewonnene Wasserstoff wird dann in einem weiteren Gastrennprozess vom Kohlendioxids befreit und als hydrierende Gaskomponente in den Reaktor eingeleitet. Diese weitere Gastrennung dient dazu, aus dem Reaktionsgas Wasserstoff zur Rückleitung in den Reaktor bereitzustellen sowie durch das abgetrennte Reaktionsgas die Energieversorgung der gesamten thermochemischen Uenwandlung sicherzustellen und/oder dieses als Strippgas ebenfalls dem Reaktor zuzuleiten.

Es ist unter gewissen Gesichtspunkten wünschenswert, hier Verbesserungen anzustreben. So sind die für die thermochemische Umwandlung im Reaktor benötigten Reduzierungen hydrierende Komponenten des Reaktionsgases In Menge und Zusammensetzung bereits mit der Wahl des Eduktes festgelegt, mithin einer weiteren Einstellbarkeit nicht zugänglich. Dies hat zur Folge, dass eine optimale Verwertung der im Reaktionsgas enthaltenen Gasanteile nicht gegeben ist, was sich begrenzend auf den Wirkungsgrad des Verfahrens sowie die Qualität und Ausbeute der Zielprodukte auswirkt und zu erhöhten Verfahrenskosten führt.

Zudem wird die Rückleitung des Reaktionsgases in den Reaktor unmittelbar und ausschließlich von dem dort vorherrschenden Reaktionsdruck bestimmt Insoweit wirken sich eventuelle Druckschwankungen im Reaktor bzw. Innerhalb des Reaktionsgaskreislaufs unmittelbar mit der Folge auf den Reaktionsgaseintrag in den Reaktor aus, dass die reduzierende, hydrierende und strippende Wirkung des Reaktionsgases Im Reaktor gleichermaßen schwankt und so die gezielte Entfernung der Crackprodukte aus der Reaktionszone, also die verfahrensspezifische selektive produktorientierte Verweitzeitsteuerung, gestört werden kann, wodurch letztlich Qualität und Ausbeute der Zielprodukte abnehmen. Darüber hinaus unterlegt das im Kreislauf geführte Reaktionsgas, allein schon bedingt durch die Vielzahl der zu durchlaufenden Verfahrensstufen, einem erheblichen Schwund, was zu einer Abnahme des Wirkungsgrads des Verfahrens führt und somit gleichfalls zu einer geringeren Zielprodukt-Ausbeute.

Die Dokumente US 4 331 531, AU 33 38 178, GB 2 211 200 und US 3 960 700 betreffen Verfahren der direkten hydrierenden Kohleverflüssigung, Allerdings ist die Kohleverflüssigung wegen der Unterschiede der Edukt-Zusammensetzung und der unterschiedlichen Molekularstrukturen zwischen Kohle und den vorstehend beschriebenen Rohstoffklassen grundsätzlich nicht mit der vorliegenden anmeldungsgemäßen Lehre vergleichbar.

Der vorliegenden Erfindung liegt die Aufgabe zugrunde, das an sich bereits sehr vorteilhafte und in der DE-Al-102 15 679 beschriebene Verfahren unter Berücksichtigung der oben beschriebenen Sachverhalte derartig weiterzubilden, dass eine Verfahrensführung möglich wird, bei der die direkte thermochemische Umwandlung von hochmolekularen organischen Edukten in niedermolekulare organische Zielprodukte in verbesserter Qualität und mit höherer Ausbeute bei insgesamt geringeren Verfahrenskosten erfolgt. Weiterhin ist es die Aufgabe der Erfindung, eine Vorrichtung zur Ausführung des erfindungsgemäßen Verfahrens anzugeben.

Diese Aufgabe wird durch ein Verfahren mit den Merkmalen des Anspruchs 1 gelöst, wobei die Erfindung auf dem Gedanken beruht, ein Verfahren zur direkten thermochemischen Umwandlung wenigstens eines hochmolekularen organischen Edukts in niedermolekulare organische Produkte anzugeben, die bei Raumtemperatur als niedrigviskose Flüssigkeiten vorliegen und brennbar sind

Die hierin alternativ angegebenen Verfahrensschritte der Konditionierung des augetrennten Reaktionsgases in Kombination mit dem fakultativen Eintrag von zusätzlichem Wasserstoff ermöglichen somit eine Einstellung der verfahrenswirksamen Komponenten des Reaktionsgases nach Menge und Zusammensetzung und mithin auch eine Einstellung der in den Reaktor rückgeführten Gesamtgasmenge. Folglich ist die gleichzeitige hydrierende, reduzierende und strippende Wirkung des Reaktionsgases im Reaktor bei der Umwandlung der Edukte mittels der erfindungsgemäßen Reaktionsgaskonditionierung steuerbar.

Die Gaskonditionlerung wird danach derart ausgeführt, dass der Wasserstoffanteil des Reaktionsgases ausreichend ist, um im Reaktor eine hydrierende Atmosphäre bzw. den für die thermochemischen Umwandlung notwendigen Wasserstoffpartialdruck zu gewährleisten. Die für den Sauerstoffabbau bei der Umwandlungsreaktion erforderliche reduzierende Atmosphäre in Reaktor wird durch die reduzierende Wirkung der Kohlenmonoxid-, Methan- und ggf. weiteren Kohlenwasserstoff-Komponenten des konditionierten Reaktionsgases bereitgestellt und in vorteilhafter Weise durch die Wasserstoffkomponente unterstützt. Die strippenden Wirkung oder der Strippeffekt des in den Reaktor rückgeführten, konditionierten Reaktionsgases wird durch die rückgeführte Gesamtgasmenge gewährleistet. Ein mögliches Defizit an Wasserstoff im abgetrennten Reaktionsgas, das etwa Edukt-bedingt auftreten kann, wird mittels des zusätzlichen Eintrags von Wasserstoff bei der Konditionierung ausgeglichen.

Mithin ergibt sich die vorteilhafte Wirkung des erfindungsgemäßen Verfahrens, nämlich die optimierte Umwandlung des Eduktes im Reaktor unter gleichzeitiger Krackung, Destillation und/oder Strippung, aus der unmittelbaren Abfolge der im einzelnen angegebenen Verfahrensschritte und ist insoweit durch die spezielle Art der Reaktionsgasführung oder Kreisgasbehandlung begründet.

Die angegebenen Konditionierungsalternativen für das abgetrennte Reaktionsgas tragen der großen Bandbreite der verfahrensgemäß verwendbaren Edukte in vorteilhafter Weise Rechnung. Abhängig vom jeweiligen Edukt bzw. den Stoffkomponenten des verwendeten Rohmaterials wird die Konditionierungsalternative ausgewählt, mit der eine optimale Zusammensetzung der einzelnen wirksamen Reaktionskomponenten und Gesamtgasmenge im Hinblick auf die gleichzeitige hydrierende, reduzierende und strippende Wirkung für die Umwandlung des Eduktes im Reaktor zu gewährleisten ist.

Die Entfernung des Kohlendioxids aus dem abgetrennten Reaktionsgas oder die Reduzierung des enthaltenen Kohlendioxidanteils gemäß der ersten Konditionierungsalternative kann beispielsweise mittels eines Membrantrennprozesses erfolgen. In dem dabei entstehenden Reaktionsgas verbleiben als wesentliche Komponenten Kohlenmonoxid, zumindest Methan und ggf. weitere Kohlenwasserstoffe und Wasserstoff, wodurch sich die Menge der wirksamen Gasanteile und deren Anteil am Gesamtstrom in vorteilhafter Weise erhöhen.

Bei der als zweite Konditionierungsalternative angegebenen Reformierung des Kohlendioxids und des Methans und/oder der weiteren Kohlenwasserstoffe werden diese Komponenten des Reaktionsgases zu Kohlenmonoxid und Wasserstoff umgesetzt, wodurch sich deren Anteil am Gesamtstrom und die Menge der wirksamen Gasanteile gegenüber der ersten Verfahrensalternative noch weiter erhöht. Eine derartige Umsetzung kann beispielsweise in Festbettreaktoren an Platinkatalysatoren erfolgen.

Eine noch weitergehende Einstellbarkeit bzw. Optimierung der wirksamen Gasanteile und deren Anteil am Gesamtgasstrom, mithin eine noch weitere Qualitätssteigerung des Reaktionsgases, ist durch die Kombination der ersten beiden Verfahrensalternativen möglich.

Nach der dritten Konditionierungsalternative wird dazu das bei der Kondensation abgetrennte Reaktionsgas in zwei parallelen Verfahrensschritten einer Kohlendioxid-Entfernung und einer Reformierung des Kohlendioxids, Methans und/oder der weiteren Kohlenwasserstoffe unterzogen.

Gemäß der vierten Konditionierungsalternative erfolgt zunächst in einem ersten Verfahrensschritt die Entfernung des Kohlendioxidanteils und unmittelbar im Anschluss daran in einem zweiten Verfahrensschritt die Reformierung der im abgetrennten Reaktionsgas gegebenenfalls dann noch vorhandenen Kohlendioxidanteile und der Anteile an Methan sowie weiteren Kohlenwasserstoffe.

Eine serielle Abfolge der Verfahrensschritte weist auch die fünfte Konditionierungsalternative auf, wonach als erster Verfahrensschritt allerdings die Reformierung der im Reaktionsgas vorhandenen Anteile an Kohlendioxid, Methan und/oder weiteren Kohlenwasserstoffen und unmittelbar daran anschließend in einem zweiten Verfahrensschritt die Entfernung der gegebenenfalls dann noch vorhandenen Kohlendioxid-Anteile erfolgt.

Jede Konditionierungsalternative umfasst zudem den bedarfsweise vorzunehmenden Eintrag von Wasserstoff in das abgetrennte Reaktionsgas. Dieser Eintrag erfolgt vorzugsweise im unmittelbaren Anschluss an die Kohlendioxid-Entfernung und/oder der Reformierung des Kohlendioxids, des Methans und/oder der weiteren Kohlenwasserstoffe.

Nach dem erfindungsgemäßen Verfahren kann somit die Menge der wirksamen Gasanteile und deren Anteil am Gesamtstrom des Reaktionsgases auf vorteilhafte Weise modifiziert werden. Gegenüber dem aus DE-A1-102 15 679 bekannten Verfahren führt die auf diese Weise mögliche Optimierung bei der Verwertung der im Reaktionsgas enthaltenen Gasanteile zu einer Erhöhung des Wirkungsgrads des Verfahrens sowie zu einer Verbesserung der Zielprodukt-Qualität und -Ausbeute bei insgesamt niedrigeren Verfahrenskosten.

Bei dem weiteren Kohlenwasserstoff kann es sich beispielsweise um Ethan, Propan und/oder Butan handeln, ohne darauf eingeschränkt zu sein. Die schwerflüchtigen Produktfraktionen können Kohlenwasserstoffe mit mindestens 18 Kohlenstoffatomen, vorzugsweise mit 20-40 Kohlenstoffatomen umfassen. Der Siedepunkt bei Atmosphärendruck kann vorzugsweise zwischen 350°C-500°C betragen.

Vorteilhafte Ausführungsarten des erfindungsgemäßen Verfahrens gehen aus den abhängigen Ansprüchen 2 bis 10 hervor und werden im Folgenden erläutert:

Bei dem erfindungsgemäßen Verfahren kommen als Edukte kohlenstoffhaltige Stoffe und/oder Stoffgemische aus langkettigen und/oder vernetzten Makromolekülen, insbesondere in Form von nachwachsenden Rohstoffen sowie Rest- und Abfallstoffen, zur Anwendung. Hierunter fallen insbesondere Biomasse, Holzabfälle, Pflanzen, Pflanzenöle, Tierfette, Knochenmehl, Altöle, Plastikabfälle und Klärschlamm.

Im Hinblick auf Qualität und Ausbeute der Zielprodukte ist es von besonderem Vorteil, wenn das Edukt und das Reaktionsgas in der flüssigen Schwerölphase des Reaktors bereitgestellt werden. Grundsätzlich ist aber auch eine Bereitstellung der Reaktionskomponenten in der Dampfphase des Reaktors möglich.

Die für die thermochemische Umwandlung optimalen Reaktionstemperaturen und Reaktionsdrücke richten sich nach den jeweiligen Edukten. Für die Umwandlung der bei dem erfindungsgemäßen Verfahren bevorzugt eingesetzten Rohstoffe in die bevorzugten Zielprodukte, nämlich Produktöle, werden Reaktionstemperaturen von 200°C bis 600°C, insbesondere von 300°C bis 500°C, bei absoluten Reaktionsdrücken von 0,1 bar bis 300 bar, insbesondere von 0,5 bar bis 200 bar, benötigt. Insbesondere bei den bevorzugten Edukten mit erhöhten Sauerstoff-, Schwefel- oder Stickstoffanteilen ist es von Vorteil, wenn bei der Umwandlung im Reaktor eine reduzierende Überdruck-Atmosphäre vorherrscht. Diese wird. bevorzugt durch den Eintrag reduzierender Gase wie zum Beispiel Kohlenmonoxid und/oder Wasserstoff unter erhöhtem Druck bis etwa 200 bar gebildet.

Zur Stabilisierung der Verfahrensführung werden die Edukte kontinuierlich dem Reaktor zugeführt und die dampfförmigen Reaktionsprodukte sowie das Reaktionsgas zweckmäßigerweise kontinuierlich aus dem Reaktor abgezogen.

Die kontinuierlich aus dem Reaktor abgezogene und durch Kondensation verflüssigte Dampfphase bildet die aus dem Reaktionsgaskreislauf abgeführten kondensierten Reaktionsprodukte mit den als Zielprodukten bevorzugten petrochemischen Brenn- und Kraftstoffe mit hohem Kohlenwasserstoffanteil und niedriger Viskosität. Durch eine Weiterbehandlung der kondensierten Reaktionsprodukte nach dem Stand der Technik werden gegebenenfalls noch vorhandene flüssige Schwerölfraktionen und Reaktionswasser durch Destillation, Kondensation und/oder Phasentrennung abgetrennt.

Das konditionierte Reaktionsgas wird vor seiner Rückführung in den Reaktor komprimiert. Durch die Verdichtung des Reaktionsgases wird sichergestellt, dass eventuelle Druckschwankungen im Reaktor bzw. Druckverluste innerhalb des Reaktionsgaskreislaufs ausgeglichen werden und somit der Reaktionsgaseintrag in den Reaktor von dem darin herrschenden Reaktionsdruck entkoppelt wird, so dass die gleichzeitige reduzierende, hydrierende und strippende Wirkung des Reaktionsgases im Reaktor konstant aufrechterhalten werden kann. Damit wird sichergestellt, dass die gezielte Entfernung der Crackprodukte aus der Reaktionszone, also die verfahrensspezifische selektive, produktorientierte Verweilzeitsteuerung, ungestört ablaufen kann, und dass insoweit Qualitäts- und Ausbeuteschwankungen bei den Zielprodukte vermieden werden.

Darüber hinaus wirkt die Komprimierung des Reaktionsgases auch stabilisierend bei einer Prozessführung unter Überdruck, wie sie etwa im Falle der Umsetzung von Edukten mit Wasserstoffmangel und/oder mit einem erhöhten Heteroatomanteil erforderlich ist. Dabei ist es besonders vorteilhaft im Hinblick auf Qualität und Ausbeute des Zielproduktes, wenn die reduzierende Überdruck-Atmosphäre durch Wasserstoff und/oder Kohlenmonoxid gebildet wird.

In einer bevorzugten Ausführungsform der Erfindung werden die aus dem Reaktionsgaskreislauf abgeführten kondensierten Reaktionsprodukte zu Wasserstoff umgesetzt, der dann wiederum als hydrierender Gasanteil dem Reaktionsgas beigemischt wird, zur steurung der hydrierenden Wirkung des Reaktionsgases im Reaktor. Diese Rückführung erfolgt vorzugsweise bei der Komprimierung des Reaktionsgases.

Im Falle eines Wasserstoffüberschusses im Reaktionsgaskreislauf kann der so gewonnene Wasserstoff entweder zwischengespeichert werden oder einer externen Verwendung zugeführt werden.

Das konditionierte Reaktionsgas wird vor seiner Rückführung in den Reaktor vorgewärmt. Durch einen solchen Verfahrensschritt wird die aus dem Stand der Technik bekannte Vorwärmung der Edukte vor deren Eintrag in den Reaktor ergänzt und in vorteilhafter Weise die Aufheizdauer des Reaktionsgemisches im Reaktor weiter verkürzt. Zweckmäßigerweise erfolgt die vorgenannte Verdichtung des konditionierten Reaktionsgases vor dessen Erwärmung.

Da die Reaktionsgaskonditionierung, ergänzt durch Verdichtung und Vorwärmung, keine weiteren Verfahrensschritte erfordert, ist die Gesamtzahl der den Reaktionsgaskreislauf bildenden Verfahrensstufen deutlich geringer als beim Stand der Technik. Demzufolge ist der Schwund von Reaktionsgas bei der Verfahrensführung erheblich geringer als dies bei dem nächstkommenden Stand der Technik der Fall ist, was demgegenüber zu einer Wirkungsgradverbesserung und letztlich zu niedrigeren Verfahrenskosten führt.

In einer weiteren vorteilhaften Weiterbildung des erfindungsgemäßen Verfahrens wird das konditionierte Reaktionsgas zum pneumatischen Edukt-Eintrag in den Reaktor verwendet. Dabei werden die in bekannter Weise als Feststoffe vorliegenden, zerkleinerten und vorgewärmten Edukte mittels des unter Überdruck stehenden Reaktionsgases insbesondere direkt in die Sumpfphase des Reaktors, unter intensiver Durchmischung aller Reaktionskomponenten, eingebracht. Ebenso ist es möglich, dass ein Teil des konditionierten Reaktionsgasstromes zum pneumatischen Edukt-Eintrag gezielt als Teilgasstrom abgezweigt wird und parallel zum Hauptgasstrom als Fördergas für den Edukt-Eintrag in den Reaktor verwendet wird.

In Ergänzung dazu, besteht eine weitere vorteilhafte Verfahrensführung darin, dass das Reaktionsgas als Inertisierungsgas für die Edukte im Reaktor zur Qualitätsverbesserung der Zielprodukte verwendet wird. Durch das Reaktionsgas werden dabei der im Reaktor vorhandene Luftsauerstoff und/oder reaktions- bzw. explosionsfähige Gase oder Gasgemische verdrängt.

In einer weiteren Ausführungsform der Erfindung mit überraschend vorteilhafter Wirkung auf Zielprodukt-Qualität und -Ausbeute, wird der im Reaktionsgas vorhandene Kohlendioxid-Anteil zur Erhöhung des Wasserstoffpartialdrucks im Reaktor wenigstens teilweise aus dem Reaktionsgaskreislauf abgeführt. Dies erweist sich insbesondere dann als vorteilhaft, wenn genügend Reaktionsgas für den Strippeffekt im Reaktor vorhanden ist. Es kann dabei auch erforderlich sein, dass zusätzliches Kohlendioxid durch geeignete Abtrennung aus dem Reaktionsgas isoliert wird, um gleichermaßen aus dem Reaktionsgaskreislauf ausgeschleust zu werden. Diese Abtrennung kann beispielsweise durch Gaswäschen wie Druckwasserwäsche (Absorptionsverfahren mit Wasser oder alkalischen Waschmitteln) oder Druckwechsel-Adsorption an Aktivkohle erfolgen.

Eine vorteilhaften Ausführungsform des erfindungsgemäßen Verfahrens besteht auch darin, dass die in dem abgetrennten und/oder konditionierten Reaktionsgas vorhandenen Kohlendioxid- und Methan- sowie weiteren Kohlenwasserstoff-Anteile aus dem Reaktionsgaskreislauf abgeführt werden, um als Reaktionsmedien für die Reformierung zur Synthesegasherstellung eingesetzt zu werden.

In einer letzten Ausführungsform des erfindungsgemäßen Verfahrens wird das abgetrennte und/oder konditionierte Reaktionsgas zu einem Teil aus dem Reaktionsgaskreislauf abgeführt und zur Deckung des thermischen Energiebedarfs bei der Umwandlung des Eduktes verwendet, wodurch eine deutliche Wirkungsgradverbesserung des Verfahrens ermöglicht wird.

Die Aufgabe der Erfindung wird weiterhin durch eine Vorrichtung mit den Merkmalen des Anspruchs 11 gelöst.

Die Erfindung wird nachfolgend beispielhaft unter Bezug auf die beigefügten schematischen Figuren mit weiteren Einzelheiten erklärt.

In diesen zeigen:

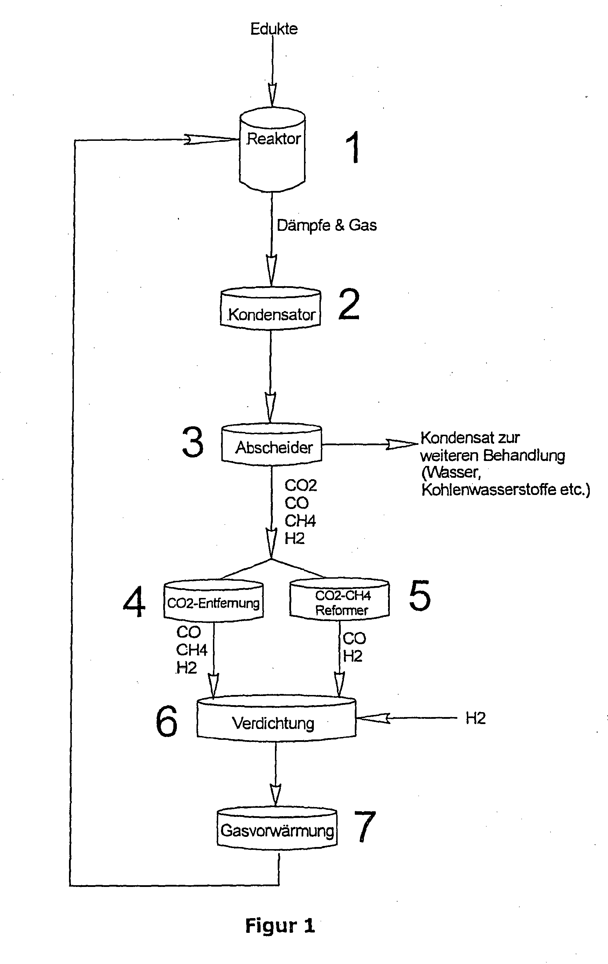

- Fig. 1: ein Strömungsdiägramm einer bevorzugten Ausführungsart der erfindungsgemäßen Vorrichtung mit Mitteln zur Entfernung von Kohlendioxid und Mitteln zur Reformierung von Kohlendioxid, Methan und weiteren Kohlenwasserstoffen in paralleler Anordnung gemäß einer Verfahrensalternative und

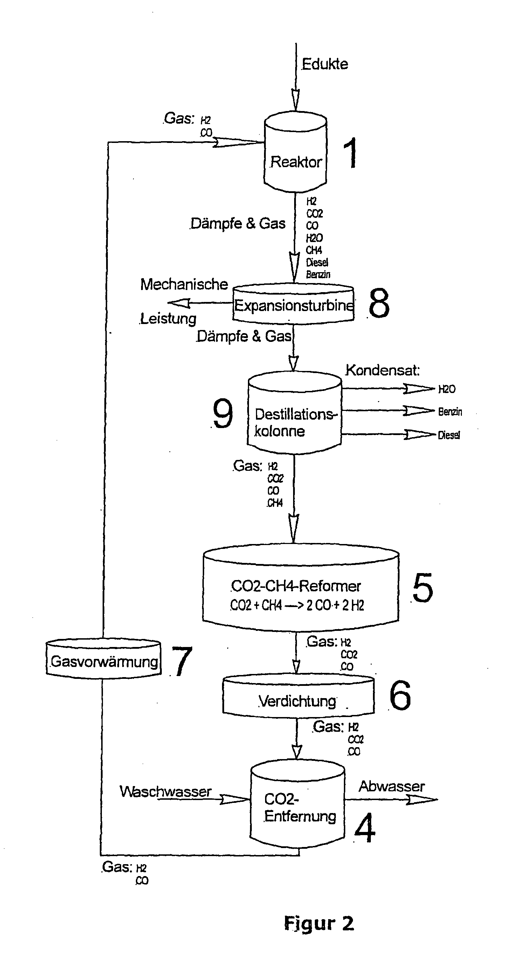

- Fig. 2: ein Strömungsdiagramm einer weiteren bevorzugten Ausführungsart der erfindungsgemäßen Vorrichtung mit Mitteln zur Entfernung von Kohlendioxid und Mitteln zur Reformierung von Kohlendioxid, Methan und weiteren Kohlenwasserstoffen in hintereinander geschalteter Anordnung gemäß einer weiteren Verfahrensalternative.

In Fig. 1 ist in schematischer Darstellung die prinzipielle Anordnung der Vorrichtungskomponenten einer bevorzugten Ausführungsart der Erfindung und der Strömungsverlauf des Reaktionsgases beim Betrieb dieser Vorrichtung angegeben. Danach werden die bei der thermochemischen Umwandlung des Eduktes entstandenen Reaktionsprodukte in Form von heißen Dämpfen und Gasen aus dem Reaktor 1 abgezogen und einem Kondensator 2 zur Verflüssigung der dampfförmigen Reaktionsprodukte unter Abkühlung zugeführt. In einem nachgeschalteten Abscheider 3 werden die flüssigen Reaktionsprodukte vom Reaktionsgas getrennt. Die abgetrennten flüssigen Reaktionsprodukte werden aus dem Reaktionsgaskreislauf ausgeschieden und in weiteren Behandlungsstufen (nicht dargestellt) in die Zielprodukte (Produktöl) überführt. Das abgetrennte Reaktionsgas, das nun als trockenes Gemisch vorliegt und im Wesentlichen die Komponenten Kohlendioxid, Kohlenmonoxid, Methan, weitere Kohlenwasserstoffe (bspw. Ethan, Propan oder Butan) und Wasserstoff umfasst, wird nunmehr in einer erste Stufe der Gaskonditionierung, aufweisend die Kohlendioxid-Entfernung 4 und parallel dazu den Reformer 5 für Kohlendioxid, Methan und weitere Kohlenwasserstoffen, zugeführt, um Kohlendioxid zu entfernen bzw. zu Wasserstoff und Kohlenmonoxid, umzusetzen. Das aus der ersten Konditionierungsstufe austretende Reaktionsgas weist jetzt noch im Wesentlichen die Komponenten Kohlenmonoxid, Methan sowie weitere Kohlenwasserstoffe und Wasserstoff auf. Das so konditionierte Reaktionsgas wird einer zweiten Stufe der Gaskonditionierung zugeführt, welche die Verdichtung 6 und eine Wasserstoffzuführung zum Eintrag von zusätzlichem Wasserstoff in den Reaktionsgaskreislauf aufweist. In einer anschließenden dritten Konditionierungsstufe wird das modifizierte und verdichtete Reaktionsgas in einer Gasvorwärmung 7 erwärmt und anschließend direkt in den Reaktor 1 rückgeleitet.

Im Folgenden wird die Erfindung anhand von Anwendungsbeispielen weitergehend erläutert:

### Beispiel 1:

Ein Schlaufenreaktor (Volumen = 100 L) wird mit einem schwerflüchtigen Öl befüllt, mit einem Gasgemisch aus 65 Vol.-% H₂, 20 Vol.-% CO und 15 Vol.-% CH₄ auf einen Druck von 100 bar bespannt und auf Reaktionstemperatur von 500 °C erwärmt.

Über ein geeignetes Eintragssystem werden die auf 200 °C vorgewärmten Edukte kontinuierlich in das heiße Öl des Reaktors mit einem Massenstrom von 50 kg/h zuzüglich 10 % Wassergehalt eindosiert. Dadurch wird eine für die Reaktion vorteilhafte Schockerwärmung der Edukte erreicht. Parallel zu der Eduktzugabe wird ein Reaktionsgasstrom mit einem Volumenstrom. von 75 Nm³/h durch den Reaktor geleitet, Zusammensetzung: 65 Vol.-% H₂, 20 Vol.-% CO und 15 Vol.-% CH₄.

Durch die ideale Durchmischung der 2 Reaktionsphasen Gas und Edukt in dem katalytisch wirkenden, schwerflüchtigen Reaktionsöl werden die Edukte in Dämpfe und Gase umgewandelt, welche durch die strippende Wirkung des Reaktionsgasstroms mit diesem kontinuierlich ausgetragen werden. Die den Reaktor verlassenen Gase und Dämpfe haben eine Temperatur von 500 °C und einen Druck von 100 bar, der Volumenstrom beträgt 100 Nm³/h mit einer Zusammensetzung: 20 Vol.-% H₂, 30 Vol.-% CO₂, 15 Vol.-% CO, 10 Vol.% CH₄ sowie 20 Vol.-% Wasser, 3 Vol.-% Diesel- und 2 Vor.-% Benzindampf.

Dieser Strom wird in einem nachgeschalteten Kondensator, der als Rohrschlangenkühler ausgeführt ist, auf 20 °C abgekühlt. Die Komponenten Wasser, Diesel und Benzin kondensieren und werden in einem anschließenden Schwerkraftabscheider unter 100 bar Druck von der Gasphase abgetrennt. Die Flüssigphase wird entspannt und einer weiteren Verwendung zugeführt.

Die Gasphase wird einer Hochdruckwaschkolonne (Füllkörperkolonne, D = 150 mm, H = 2,5 m) zugeführt: Unter 100 bar Druck wird das Gas (75 Nm³/h) von unten eingeleitet und Wasser (m = 500 kg/h) als Waschflüssigkeit im Gegenstrom von oben verrieselt. Das Abwasser wird durch Entspannung regeneriert und kann anschließend wieder zur CO₂-Absorption eingesetzt werden. Der Frischwasserverbrauch beträgt bei diesem Konzept etwa 5 - 10 % des Waschwasserstroms.

Der gereinigte Gasstrom (45 Nm³/h) enthält noch vernachlässigbare Spuren von CO₂ und im Wesentlichen 42 Vol.-% H₂, 33 Vol.-% CO sowie 25 Vol.-% CH₄. Dieser Gasstrom wird mittels eines Kolbenkompressors unter Zugabe von 30 Nm³/h H₂ auf 110 bar verdichtet und in einem Rohrschlangenwärmetauscher auf 300 °C vorgewärmt zurück in den Reaktor geleitet, wo dieser wieder als Reaktionsgas mit einer Zusammensetzung von 65 Vol.-% H₂, 20 Vol.-% CO und 15 Vor.-% CH₄ und zur Strippung der Reaktionsprodukte zur Verfügung steht.

Diese Variante der Kreisgasbehandlung stellt ein apparativ einfaches Konzept dar. Um den Strippgasvolumenstrom und den Wasserstoffpartialdruck konstant zu halten, wird zusätzlich noch H₂ eingespeist.

### Beispiel 2:

Ein Schlaufenreaktor (Volumen = 100 L) wird mit einem schwerflüchtigen Öl befüllt, mit einem Gasgemisch aus 53 Vol.-% H₂ und 47 Vol.-% CO auf einen Druck von 80 bar bespannt und auf Reaktionstemperatur von 450 °C erwärmt.

Über ein geeignetes Eintragssystem werden die auf 200 °C vorgewärmten Edukte kontinuierlich in das heiße Öl des Reaktors mit einem Massenstrom von 50 kg/h zuzüglich 10 % Wassergehalt eindosiert. Dadurch wird eine für die Reaktion vorteilhafte Schockerwärmung der Edukte erreicht. Parallel zu der Eduktzugabe wird ein Reaktionsgasstrom mit einem Volumenstrom von 78 Nm³/h durch den Reaktor geleitet, Zusammensetzung: 53 Vol.-% H₂ und 47 Vol.-% CO.

Durch die ideale Durchmischung der 2 Reaktionsphasen Gas und Edukt in dem katalytisch wirkenden, schwerflüchtigen Reaktionsöl werden die Edukte in Dämpfe und Gase umgewandelt, welche durch die strippende Wirkung des Reaktionsgasstroms mit diesem kontinuierlich ausgetragen werden. Die den Reaktor verlassenen Gase und Dämpfe haben eine Temperatur von 450 °C und einen Druck von 80 bar, der Volumenstrom beträgt 100 Nm³/h mit einer Zusammensetzung: 20 Vol.-% H₂, 30 Vol.-% CO₂, 15 Vol.-% CO, 10 Vol.% CH₄ sowie 20 Vol.-% Wasser, 3 Vol.-% Diesel- und 2 Vol.-% Benzindampf.

Über eine Gasexpanisonsturbine wird dieser Gas-/ Dampfstrom auf 2 bar entspannt, wodurch das Gemisch auf 350 °C abkühlt. Die Expansionsarbeit des Gases wird hier in mechanische Arbeit umgewandelt, welche als Wellenleistung abgeführt wird.

Das so entspannte Gemisch wird in einer herkömmlichen Destillationskolonne bei Atmosphärendruck in seine Fraktionen Wasser, Benzin, Diesel und Gas zerlegt. Die flüssigen Fraktionen werden als Produkte zur weiteren Verwendung abgeführt, während der Gasstrom (75 Nm³), Zusammensetzung: 25 Vol.-% H₂, 40 Vol.-% CO₂, 20 Vol.-% CO und 15 Vol.-% CH₄, in einen Reformer geleitet wird. Hier werden die Bestandteile CO₂ und CH₄ des Reaktionsgases an einem Festbettreaktor selektiv mit Hilfe eines Platin-Katalysators bei 600 °C zu CO und H₂ umgewandelt. Die Umsetzung des CH₄ erfolgt hier fast vollständig nach der Reaktionsgleichung; siehe Beispiel 2. Nach dem Reformierungsprozess wird das Gas abgekühlt, der Volumenstrom beträgt nunmehr 97,5 Nm³/h mit einer Zusammensetzung von 42 Vol.-% H₂, 20 Vol.-% CO₂ und 38 Vol.-% CO.

Dieser Gasstrom wird mittels eines Kolbenkompressors auf 90 bar verdichtet und einer Hochdruckwaschkolonne (Füllkörperkolonne, D = 200 mm, H = 2,5 m) zugeführt: Unter 90 bar Druck wird das Gas (97,5 Nm³/h) von unten eingeleitet und Wasser (m = 380 kg/h) als Waschflüssigkeit im Gegenstrom von oben verrieselt. Das Abwasser wird durch Entspannung regeneriert und kann anschließend wieder zur CO₂-Absorption eingesetzt werden. Der Frischwasserverbrauch beträgt bei diesem Konzept etwa 5 - 10 % des Waschwasserstroms.

Der gereinigte Gasstrom (78 Nm³/h) enthält noch vernachlässigbare Spuren von CO₂ und im Wesentlichen 53 Vol.-% H₂ und 47 Vol.-% CO.

In einem Rohrschlangenwärmetauscher wird dieser auf 400 °C vorgewärmt. Der heiße Gasstrom wird zurück in den Reaktor geleitet, wo dieser wieder als Reaktionsgas mit einer Zusammensetzung von 53 Vol.-% H₂ und 47 Vol.-% CO und zur Strippung der Reaktionsprodukte zur Verfügung steht.

Besonders vorteilhaft sind hier die Gewinnung von Energie aus den verdichteten Gasen, die Produktion von Fertigprodukten in Form von Benzin und Diesel sowie der wasserstoffautarke Betrieb des Prozess.

Ferner werden folgende Verfahren und Vorrichtungen offenbart:
1. Verfahren zur direkten thermochemischen Umwandlung wenigstens eines hochmolekularen organischen Eduktes in niedermolekulare organische Produkte, die bei Raumtemperatur als niedrigviskose Flüssigkeiten vorliegen und brennbar sind, aufweisend die Verfahrensschritte:
   - Bereitstellung des Edukts, schwerflüchtiger Produktfraktionen und wenigstens eines reduzierenden Gases in einem Reaktor,
   - Schockerwärmung des Edukts auf die Reaktionstemperatur,
   - Umwandlung des Eduktes bei erhöhter Temperatur unter Ausnutzung der reduzierenden Wirkung des Gases und/oder autokatalytischer Effekte der Produktfraktionen in dampfförmige Reaktionsprodukte und Reaktionsgas,
   - Abtrennung des Reaktionsgases mittels Kondensation unter Abführung der kondensierten Reaktionsprodukte, wobei das abgetrennte Reaktionsgas
      a) bei sauerstoffhaltigen Edukten Wasserstoff, Methan sowie gegebenenfalls weitere Kohlenwasserstoffe, Kohlenmonoxid und Kohlendioxid und
      b) bei sauerstofffreien Edukten Wasserstoff, Methan sowie gegebenenfalls weitere Kohlenwasserstoffe umfasst,
      gekennzeichnet durch die weiteren Verfahrensschritte der
   - Konditionierung des abgetrennten Reaktionsgases mittels
      ∘ Ausschleusung wenigstens eines Teils des Gasgemisches und/oder
      ∘ Entfernung wenigstens eines Teils des Kohlendioxids oder
      ∘ Reformierung wenigstens eines Teils des Kohlendioxids, des Methans und/oder weiterer Kohlenwasserstoffe oder
      ∘ Entfernung eines Teils des Kohlendioxids und paralleler Reformierung wenigstens eines weiteren Teils des Kohlendioxids und wenigstens eines Teils des Methans und/oder weiterer Kohlenwasserstoffe oder
      ∘ Entfernung eines Teils des Kohlendioxids und anschließender Reformierung wenigstens eines weiteren Teils des Kohlendioxids und wenigstens eines Teils des Methans und/oder weiterer Kohlenwasserstoffe oder
      ∘ Reformierung eines Teils des Kohlendioxids und wenigstens eines Teils des Methans und/oder weiterer Kohlenwasserstoffe und anschließender Entfernung wenigstens eines weiteren Teils des Kohlendioxids und gegebenenfalls zusätzlich mittels Eintrag von Wasserstoff und/oder eines anderen reduzierenden Stoffes, insbesondere in Form von Kohlenmonoxid oder Tetralin,
   - Rückführung des konditionierten Reaktionsgases in den Reaktor zur gleichzeitigen Erzeugung einer reduzierenden, insbesondere hydrierenden Wirkung für die Umwandlung des Edukts und/oder einer strippenden Wirkung für den Austrag des Produkts.
2. Verfahren nach Punkt 1, dadurch gekennzeichnet, dass die sauerstoffhaltigen und/oder sauerstofffreien Edukte weitere Heteroatome in Form von Stickstoff, Schwefel und/oder Halogenen enthalten, die in Form von Ammoniak, Schwefelwasserstoff und/oder Halogenwasserstoff wenigstens zum Teil entfernt werden.
3. Verfahren nach Punkt 1 oder 2, dadurch gekennzeichnet, dass als Edukte kohlenstoffhaltige Stoffe und/oder Stoffgemische aus langkettigen und/oder vernetzten Makromolekülen, insbesondere in Form von nachwachsenden Rohstoffen sowie Rest- und Abfallstoffen, verwendet werden.
4. Verfahren nach einem der Punkte 1 bis 3, dadurch gekennzeichnet, dass das Edukt und das Reaktionsgas in einer flüssigen, schwerflüchtigen Produktfraktion und/oder in der Dampfphase des Reaktors bereitgestellt werden.
5. Verfahren nach einem der Punkte 1 bis 4, dadurch gekennzeichnet, dass die Umwandlung des Edukts im Reaktor mit einer Reaktionstemperatur von 200°C bis 600°C, insbesondere von 300°C bis 500°C, ausgeführt wird.
6. Verfahren nach einem der Punkte 1 bis 4, dadurch gekennzeichnet, dass die Umwandlung des Edukts im Reaktor bei einem absoluten Reaktionsdruck von 0,1 bar bis 300 bar, insbesondere von 1 bar bis 250 bar, ausgeführt wird.
7. Verfahren nach einem der Punkte 1 bis 4, dadurch gekennzeichnet, dass die Umwandlung des Edukts im Reaktor in reduzierender Überdruck-Atmosphäre, Insbesondere von 20 bis 250 bar, ausgeführt wird.
8. Verfahren nach einem der Punkte 1 bis 7, dadurch gekennzeichnet, dass die dampfförmigen Reaktionsprodukte und das Reaktionsgas kontinuierlich aus dem Reaktor abgezogen werden.
9. Verfahren nach einem der Punkte 1 bis 8, dadurch gekennzeichnet, dass die Edukte kontinuierlich dem Reaktor zugeführt werden.
10. Verfahren nach einem der Punkte 1 bis 9, dadurch gekennzeichnet, dass aus den aus dem Reaktionsgaskreislauf abgeführten kondensierten Reaktionsprodukten petrochemische Roh-, Brenn- und Kraftstoffe mit hohem Kohlenwasserstoffanteil und niedriger Viskosität gewonnen werden.
11. Verfahren nach einem der Punkte 1 bis 10, dadurch gekennzeichnet, dass das konditionierte Reaktionsgas in komprimiertem Zustand in den Reaktor rückgeführt wird.
12. Verfahren nach einem der Punkte 1 bis 11, dadurch gekennzeichnet, dass aus den aus dem Reaktionsgaskreislauf abgeführten kondensierten Reaktionsprodukten Wasserstoff zum Eintrag in den Reaktionsgaskreislauf gewonnen wird.
13. Verfahren nach Punkt 11 oder 12, dadurch gekennzeichnet, dass der Wasserstoff bei der Komprimierung des Reaktionsgases in den Reaktionsgaskreislauf rückgeführt wird.
14. Verfahren nach einem der Punkte 1 bis 13 , dadurch gekennzeichnet, dass das konditionierte Reaktionsgas in vorgewärmtem Zustand in den Reaktor rückgeführt wird.
15. Verfahren nach einem der Punkte 1 bis 14, dadurch gekennzeichnet, dass das konditionierte Reaktionsgas zum pneumatischen Eintrag des Edukts in den Reaktor verwendet wird.
16. Vorrichtung zur Ausführung des Verfahrens gemäß einem der Punkte 1 bis 15, aufweisend einen Reaktionsgaskreislauf zur Führung von gasförmigen Reaktionsprodukten mit mindestens
   - einem Reaktor (1) zur Ausführung von thermochemischen Umwandlungsreaktionen eines Reaktorgemisches im Reaktor,
   - einem Mittel (2) zur Verflüssigung von dampfförmigen Reaktionsprodukten,
   - einem Mittel (3) zur Trennung von flüssigen Reaktionsprodukten und Reaktionsgas,
      dadurch gekennzeichnet, dass weiterhin
   - Mittel zur Konditionierung des abgetrennten Reaktionsgases (4, 5) für die Einstellung einer reduzierenden, insbesondere hydrierenden und/oder strippenden Wirkung des Reaktionsgases im Reaktor vorgesehen sind, umfassend
      ∘ Mittel zur Ausschleusung eines Teils des Gasgemisches und/oder
      ∘ Mittel zur Entfernung von Kohlendioxid (4) oder
      ∘ Mittel zur Reformierung von Kohlendioxid, Methan und/oder weiteren Kohlenwasserstoffen (5) oder
      ∘ Mittel zur Entfernung von Kohlendioxid (4) sowie Mittel zur Reformierung von Kohlendioxid, Methan und /oder weiteren Kohlenwasserstoffen (5) in paralleler Anordnung oder
      ∘ Mittel zur Reformierung von Kohlendioxid, Methan und/oder weiteren Kohlenwasserstoffen (5) sowie im Reaktionsgaskreislauf in Flussrichtung davor angeordnet, Mittel zur Entfernung von Kohlendioxid (4) oder
      ∘ Mittel zur Entfernung von Kohlendioxid (4) sowie im Reaktionsgaskreislauf in Flussrichtung davor angeordnet, Mittel zur Reformierung von Kohlendioxid, Methan und/oder weiteren Kohlenwasserstoffen (5) und
   - gegebenenfalls zusätzlich im Reaktionsgaskreislauf in Flussrichtung davor oder danach angeordnet, Mittel zum Eintrag von Wasserstoff und/oder eines anderen reduzierenden Stoffs.
17. Vorrichtung nach Punkt 16 , dadurch gekennzeichnet, dass der Reaktionsgaskreislauf hochdruckstabil ausgebildet ist und Mittel zur Erwärmung des Gases aufweist.
18. Vorrichtung nach Punkt 16 oder 17, dadurch gekennzeichnet, dass Komprimierungsmittel (6) zum Ausgleich von Druckverlusten im Reaktionsgaskreislauf vorgesehen sind.

### Bezugszeichenliste

- 1: Reaktor
- 2: Kondensator
- 3: Abscheider
- 4: Kohlendioxid-Entfernung
- 5: Reformer für Kohlendioxid, Methan und weitere Kohlenwasserstoffe
- 6: Verdichtung
- 7: Gasvorwärmung

## Patentansprüche

1. Verfahren zur direkten thermochemischen Umwandlung wenigstens eines hochmolekularen organischen Eduktes in niedermolekulare organische Produkte, die bei Raumtemperatur als niedrigviskose Flüssigkeiten vorliegen und brennbar sind, wobei als Edukt kohlenstoffhaltige Stoffe und/oder Stoffgemische aus langkettigen und/oder vernetzten Makromolekülen, in Form von nachwachsenden Rohstoffen sowie Rest- und Abfallstoffen, zur Anwendung kommt,
aufweisend die Verfahrensschritte:
- Bereitstellung des Edukts, schwerflüchtiger Produktfraktionen und wenigstens eines reduzierenden Gases in einem Reaktor,
- Schockerwärmung des Edukts im Sekundenbereich auf die Reaktionstemperatur von 200°C bis 600°C,
- Umwandlung des Eduktes bei der Reaktionstemperatur unter Ausnutzung der reduzierenden Wirkung des Gases und/oder autokatalytischer Effekte der Produktfraktionen in dampfförmige Reaktionsprodukte und Reaktionsgas,
- Abtrennung des Reaktionsgases mittels Kondensation unter Abführung der kondensierten Reaktionsprodukte, wobei das abgetrennte Reaktionsgas
a) bei sauerstoffhaltigen Edukten Wasserstoff, Methan sowie gegebenenfalls weitere Kohlenwasserstoffe, Kohlenmonoxid und Kohlendioxid und
b) bei sauerstofffreien Edukten Wasserstoff, Methan sowie gegebenenfalls weitere Kohlenwasserstoffe umfasst,
- Konditionierung des abgetrennten Reaktionsgases mittels
Ausschleusung wenigstens eines Teils des Gasgemisches und zusätzlich mittels Eintrag von Wasserstoff und/oder eines anderen reduzierenden Stoffes, insbesondere in Form von Kohlenmonoxid oder Tetralin,
- Rückführung des konditionierten Reaktionsgases in den Reaktor zur gleichzeitigen Erzeugung einer reduzierenden, insbesondere hydrierenden Wirkung für die Umwandlung des Edukts und/oder einer strippenden Wirkung für den Austrag des Produkts, wobei
das konditionierte Reaktionsgas vor seiner Rückführung in den Reaktor komprimiert und vorgewärmt wird.

2. Verfahren nach Anspruch 1, **dadurch gekennzeichnet, dass** die Umwandlung des Edukts im Reaktor mit einer Reaktionstemperatur von 300°C bis 500°C ausgeführt wird.

3. Verfahren nach Anspruch 1 oder 2, **dadurch gekennzeichnet, dass** die Umwandlung des Edukts im Reaktor bei einem absoluten Reaktionsdruck von 0,1 bar bis 300 bar, insbesondere von 1 bar bis 250 bar, ausgeführt wird.

4. Verfahren nach einem der Ansprüche 1 bis 3, **dadurch gekennzeichnet, dass** die Umwandlung des Edukts im Reaktor in reduzierender Überdruck-Atmosphäre, insbesondere von 20 bis 250 bar, ausgeführt wird.

5. Verfahren nach einem der Ansprüche 1 bis 4, **dadurch gekennzeichnet, dass** die dampfförmigen Reaktionsprodukte und das Reaktionsgas kontinuierlich aus dem Reaktor abgezogen werden.

6. Verfahren nach einem der Ansprüche 1 bis 5, **dadurch gekennzeichnet, dass** die Edukte kontinuierlich dem Reaktor zugeführt werden.

7. Verfahren nach einem der Ansprüche 1 bis 6, **dadurch gekennzeichnet, dass** aus den aus dem Reaktionsgaskreislauf abgeführten kondensierten Reaktionsprodukten petrochemische Roh-, Brenn- und Kraftstoffe mit hohem Kohlenwasserstoffanteil und niedriger Viskosität gewonnen werden.

8. Verfahren nach einem der Ansprüche 1 bis 7, **dadurch gekennzeichnet, dass** aus den aus dem Reaktionsgaskreislauf abgeführten kondensierten Reaktionsprodukten Wasserstoff zum Eintrag in den Reaktionsgaskreislauf gewonnen wird.

9. Verfahren nach einem der Ansprüche 1 bis 8 , **dadurch gekennzeichnet, dass** der Wasserstoff bei der Komprimierung des Reaktionsgases in den Reaktionsgaskreislauf rückgeführt wird.

10. Verfahren nach einem der Ansprüche 1 bis 9, **dadurch gekennzeichnet, dass** das konditionierte Reaktionsgas zum pneumatischen Eintrag des Edukts in den Reaktor verwendet wird.

11. Vorrichtung zur Ausführung des Verfahrens gemäß einem der Ansprüche 1 bis 10, aufweisend einen Reaktionsgaskreislauf zur Führung von gasförmigen Reaktionsprodukten mit mindestens
- einem Reaktor (1) zur Ausführung von thermochemischen Umwandlungsreaktionen eines Reaktorgemisches im Reaktor,
- einem Mittel (2) zur Verflüssigung von dampfförmigen Reaktionsprodukten,
- einem Mittel (3) zur Trennung von flüssigen Reaktionsprodukten und Reaktionsgas,
- einem Mittel zur Schockerwärmung des Edukts im Sekundenbereich auf die Reaktionstemperatur von 200°C bis 600°C,
- Mitteln zur Konditionierung des abgetrennten Reaktionsgases (4, 5) für die Einstellung einer reduzierenden, insbesondere hydrierenden und/oder strippenden Wirkung des Reaktionsgases im Reaktor vorgesehen sind, umfassendMittel zur Ausschleusung eines Teils des Gasgemisches und
- zusätzlich im Reaktionsgaskreislauf in Flussrichtung davor oder danach angeordnet, Mittel zum Eintrag von Wasserstoff und/oder eines anderen reduzierenden Stoffs und
- Mittel zur Rückführung des konditionierten Reaktionsgases in den Reaktor,
**dadurch gekennzeichnet, dass**
der Reaktionsgaskreislauf hochdruckstabil ausgebildet ist und Mittel zur Erwärmung des Gases aufweist und,
dass Komprimierungsmittel (6) zum Ausgleich von Druckverlusten im Reaktionsgaskreislauf vorgesehen sind.

## Claims

1. Method for the direct thermochemical conversion of at least one highmolecular organic reactant into low-molecular organic products, which at room temperature take the form of low-viscosity fluids and are combustible, wherein carbonaceous substances and/or mixtures of substances consisting of long-chain and/or cross-linked macro molecules in the form of renewable resources as well as residual and waste materials, are used as the reactant,
comprising the following process steps:
- providing the reactant, the nonvolatile product fractions as well as at least one reducing gas inside a reactor,
- shock-heating the reactant within the range of seconds up to the reaction temperature of 200°C to 600°C,
- conversion of the reactant at reaction temperature into reaction products in the vapour state and reaction gas by using the reducing effect of the gas and/or the autocatalytic effects of the product fractions,
- partitioning the reaction gas by means of condensation while draining the condensing reaction products, wherein the partitioned reaction gas comprises
a) hydrogen, methane, as well as possibly other hydrocarbons, carbon monoxide and carbon dioxide for such reactants containing oxygen, and
b) hydrogen, methane, as well as possibly other hydrocarbons for such reactants not containing oxygen,
- conditioning of the partitioned reaction gas by means of exfiltration of at least a portion of the mixture of gases and additionally by means of supplying hydrogen and/or another reducing substance, particularly in the form of carbon monoxide or tetralin
- re-circulation of the conditioned reaction gas into the reactor for the simultaneous creation of a reducing, particularly hydrogenating effect for the conversion of the reactant and/or of a stripping effect for the draining of the product, wherein
the conditioned reaction gas is compressed into the reactor and preheated prior to being re-circulated.

2. Method according to claim 1, **characterized in that** the conversion of the reactant inside the reactor is performed at a reaction temperature of 300°C to 500°C.

3. Method according to any of the claims 1 or 2, **characterized in that** the conversion of the reactant inside the reactor is performed at an absolute reaction pressure of 0.1 bar to 300 bar, particularly of 1 bar to 250 bar.

4. Method according to any of the claims 1 to 3, **characterized in that** the conversion of the reactant inside the reactor is performed in a reduced overpressure atmosphere, particularly in the range of 20 bar to 250 bar.

5. Method according to any of the claims 1 to 4, **characterized in that** the reaction products in the vapour state and the reaction gas are continuously drained out of the reactor.

6. Method according to any of the claims 1 to 5, **characterized in that** the reactants are continuously supplied into the reactor.

7. Method according to any of the claims 1 to 6, **characterized in that** petrochemical raw materials, combustibles and fuels with a high carbon content and low viscosity are obtained from the condensed reaction products that are drained out of the reaction cycle.

8. Method according to any of the claims 1 to 7, **characterized in that** hydrogen to be supplied into the reaction cycle is obtained from the condensed reaction products that are drained out of the reaction cycle.

9. Method according to any of the claims 1 to 8, **characterized in that** the hydrogen is re-circulated into the reaction cycle during the compression of the reaction gas.

10. Method according to any of the claims 1 to 9, **characterized in that** the conditioned reaction gas is used for the pneumatic supply of the reactant into the reactor.

11. Appliance for carrying out the method according to any of the claims 1 to 10, having a reaction cycle for the conduction of gaseous reaction products with at least
- one reactor (1) for carrying out thermochemical transformation reactions of a reaction mixture inside the reactor,
- means (2) for liquefaction of reaction products in the vapour state,
- means (3) for separating the liquid reaction products from the reaction gas,
- means for shock heating the reactant within the range of seconds up to a reaction temperature of 200°C to 600°C
- means for conditioning the partitioned reaction gas (4, 5) so that a reducing, particularly a hydrogenating and/or stripping effect of the reaction gas may occur inside the reactor, including means for the exfiltration of a part of the mixture of gases and
- means for the supply of hydrogen and/or of another reducing substance additionally disposed within the reaction gas cycle in the downstream and the upstream direction, and
- means for re-circulating the conditioned reaction gas into the reactor,
**characterized in that**
the reaction gas cycle is designed to be high pressure stable and comprises means for heating up the gas, and
**in that** compression means (6) for the purpose of compensating for pressure loss are provided in the reaction gas cycle.

## Revendications

1. Procédé de transformation thermochimique directe d'au moins un réactif organique de masse moléculaire élevée en produits organiques à masse moléculaire faible qui, à température ambiante, prennent la forme de fluides inflammables à basse viscosité, dans lequel les substances utilisées en tant que réactifs sont des substances contenant du carbone et/ou des mélanges de substances formées de macromolécules à longue chaîne et/ou réticulées sous la forme de matières premières renouvelables ou de déchets et résidus,
comprenant les étapes de procédé suivantes:
- Préparation du réactif, de fractions de produit peu volatiles et d'au moins un gaz réducteur dans un réacteur,
- Choc thermique du réactif en quelques secondes à la température de réaction de 200 à 600 °C,
- Transformation du réactif à la température de réaction au moyen de l'effet réducteur du gaz et/ou des effets autocatalytiques des fractions de produit dans des produits ou gaz réactifs sous forme de vapeur,
- Séparation du gaz réactif par condensation et évacuation des produits réactifs condensées, le gaz réactif séparé comprenant
a) avec des réactifs oxygénés, de l'hydrogène, du méthane ainsi que d'autres hydrocarbures, monoxyde et dioxyde de carbone dans certains cas, et
b) avec des réactifs non oxygénés, de l'hydrogène, du méthane ainsi que d'autres hydrocarbures dans certains cas;
- Conditionnement du gaz réactif séparé par exfiltration d'au moins une partie du mélange gazeux et, en outre, par injection d'hydrogène et/ou d'une autre substance réductrice, notamment sous la forme de monoxyde de carbone ou de tétraline,
- Recyclage du gaz réactif conditionné vers le réacteur pour l'obtention simultanée d'un effet réducteur et notamment hydratant pour la transformation du réactif et/ou un effet d'élimination pour l'évacuation du produit,
le gaz réactif conditionné étant comprimé et préchauffé avant d'être recyclé vers le réacteur.

2. Procédé selon la revendication 1, **caractérisé en ce que** la transformation du réactif est effectuée à une température de réacteur de 300 à 500 °C.

3. Procédé selon les revendications 1 ou 2, **caractérisé en ce que** la transformation du réactif dans le réacteur est effectuée à une pression réactionnelle absolue de 0,1 à 300 bars, notamment de 1 à 250 bars.

4. Procédé selon l'une des revendications 1 à 3, **caractérisé en ce que** la transformation du réactif dans le réacteur est effectuée dans une atmosphère en surpression réductrice, notamment de 20 à 250 bars.

5. Procédé selon l'une des revendications 1 à 4, **caractérisé en ce que** les produits réactifs et le gaz réactif sous forme de vapeur sont continuellement extraits du réacteur.

6. Procédé selon l'une des revendications 1 à 5, **caractérisé en ce que** les réactifs sont continuellement acheminés vers le réacteur.

7. Procédé selon l'une des revendications 1 à 6, **caractérisé en ce que** des matières premières, combustibles et carburants à haute teneur en hydrocarbures et faible viscosité sont obtenus à partir des produits réactifs condensés extraits du circuit de gaz réactif.

8. Procédé selon l'une des revendications 1 à 7, **caractérisé en ce que** de l'hydrogène devant être alimenté dans le circuit de gaz réactif est obtenu à partir des produits réactifs condensés extraits du circuit de gaz réactif.

9. Procédé selon l'une des revendications 1 à 8, **caractérisé en ce que** l'hydrogène est réacheminé au circuit de gaz réactif lors de la compression du gaz réactif.

10. Procédé selon l'une des revendications 1 à 9, **caractérisé en ce que** le gaz réactif conditionné est utilisé pour l'injection pneumatique du réactif dans le réacteur.

11. Dispositif pour l'exécution du procédé selon l'une des revendications 1 à 9, comportant un circuit de gaz réactif pour la circulation de produits réactifs sous forme gazeuse avec au moins
- Un réacteur (1) pour l'exécution de réactions de transformation thermochimiques d'un mélange de réacteur dans le réacteur,
- Un moyen (2) de liquéfaction de produits réactifs sous forme de vapeur,
- Un moyen (3) de séparation de produits réactifs liquides et du gaz réactif,
- Un moyen d'administration de choc thermique au réactif en quelques secondes à une température de réaction de 200 à 600 °C,
- Moyens de conditionnement du gaz réactif séparé (4, 5) pour le réglage d'un effet réducteur, notamment hydratant et/ou d'élimination du gaz réactif dans le réacteur, comprenant un moyen d'exfiltration d'une partie du mélange gazeux et
- Ainsi qu'un moyen d'alimentation d'hydrogène et/ou d'une autre substance réductrice disposé en amont ou en aval dans le circuit de gaz réactif et dans la direction d'écoulement, et
- Moyen de recyclage du gaz réactif conditionné vers le réacteur,
**caractérisé en ce que**
le circuit de gaz réactif est construit de façon à soutenir les pressions élevées et comporte un moyen de réchauffement du gaz, et
que des moyens de compression (6) sont disposés de façon à compenser les pertes de pression dans le circuit de gaz réactif.
